# EUROPÄISCHE PATENTANMELDUNG

(11) **EP 1 063 498 A2**
(43) Veröffentlichungstag der Anmeldung: **27.12.2000**
(21) Anmeldenummer: 00110140.1
(22) Anmeldetag: 11.05.2000
(51) Int. Cl.: G01F 23/00, F01M 11/12

(54) **Verfahren und Vorrichtung zur Bestimmung der Flüssigkeitsmenge in einem bewegten Behalter**

(30) Priorität: 25.06.1999 DE 19929295
(71) Anmelder: Volkswagen Aktiengesellschaft, 38436 Wolfsburg (DE)
(72) Erfinder: Pickert, Detlef, 38448 Wolfsburg (DE); Sölter, Harald, Dr., 38350 Helmstedt (DE); Göllinger, Harald, Dr., 38118 Braunschweig (DE); Jirousek, Peter, 38448 Wolfsburg (DE)

(57) **Zusammenfassung**

Die Erfindung betrifft ein Verfahren und eine Vorrichtung zur Bestimmung der Flüssigkeitsmenge in einem bewegten Behälter, mittels eines Sensors zur Erfassung des Flüssigkeitsstandes im Behälter an wenigstens einem Punkt (X₀, Y₀) und eines nichtlinearen Prozeßbeobachters (2), wobei dem Prozeßbeobachter (2) fahrzeugdynamische Meßgrößen zugeführt werden, aus denen der Prozeßbeobachter (2) Lage und Beschleunigungen auf den Behälter ableitet und daraus die Flüssigkeitsverteilung in dem Behälter berechnet.

## Beschreibung

Die Erfindung betrifft ein Verfahren und eine Vorrichtung zur Bestimmung der Flüssigkeitsmenge in einem bewegten Behälter, insbesondere zur Bestimmung der Motorölmenge in einem Kraftfahrzeug.

Aus der Patentschrift EP 0 191 458 B1 ist ein Warnsystem für die Motorölalterung bei einem Kraftfahrzeug bekannt, bei dem jeweils nach Anschalten der Zündung und vor dem Starten des Motors der Motorfüllstand erfaßt und mit dem bisher vorliegenden Füllstandswert verglichen wird. Ist der aktuell erfaßte Ölstandswert nicht größer als der bisherige Wert, wird letzterer durch den neu gemessenen Wert aktualisiert. Während des anschließenden Fahrbetriebes nach Starten des Motors wird eine integrale, ölalterungsindikative Größe aus der Erfassung der zurückgelegten Fahrleistung, der Öltemperatur und der Motorgeschwindigkeit abgleitet und parallel dazu eine Ölgebrauchsdauer ermittelt. Sobald diese Größen vorgegebene Grenzwerte erreicht haben, wird eine Ölwechselwarnmeldung erzeugt. Ergibt sich beim Vergleich des neu gemessenen Ölstands mit dem bisher vorliegenden Wert, daß der erste größer als letzterer ist, so wird dies dahingehend interpretiert, daß in der vorangegangenen Fahrzeugstillstandsphase ein Ölnachfüll- oder Ölwechselvorgang stattgefunden hat. In diesem Fall werden die integrale ölalterungsspezifische Größe sowie die parallel dazu erfaßte Ölgebrauchsdauer auf aktuelle Werte gesetzt, die berücksichtigen, daß zu einem bestimmten Anteil frisches Öl zugegeben wurde.

Nachteilig an diesem ähnlichen Verfahren ist, daß bei der stabilen Messung bei Betriebsbeginn des Kraftfahrzeuges große Meßfehler auftreten können, beispielsweise wenn das Kraftfahrzeug beim Start nicht vollkommen eben auf der Straße steht. Aufgrund dieser Ungenauigkeiten bei der Anfangsmessung sind auch die nachfolgenden Schätzungen sehr ungenau.

Aus der EP 0 786 584 ist ein Verfahren zur Bestimmung der Menge einer in einem weitgehend abgeschlossenen System eines Kraftfahrzeuges befindlichen Flüssigkeit, bekannt, deren Füllstand fahrzustandsabhängig schwankt.
Dazu werden im Fahrbetrieb fahrzustandsindikative Größen erfaßt, woraus der momentane Fahrzustand ermittelt wird. Wenigstens während ausgewählter Fahrzustände wird im Fahrbetrieb der zu dem jeweiligen Fahrzustand gehörige Flüssigkeitsfüllzustand erfaßt und anhand einer vorgegebenen Abhängigkeit der Fluidmenge vom Fahrzustand und vom Füllstand die momentane Füllmenge bestimmt. Diese Art der Flüssigkeitsmengenbestimmung bleibt weitestgehend unbeeinflußt von den fahrzustandsabhängigen Schwankungen des Flüssigkeitsfüllstandes, da diese Schwankungen durch die hierzu passend vorgegebene Abhängigkeit des Flüssigkeitsstandes und damit der Flüssigkeitsmenge vom Fahrzeugzustand herausgerechnet und zudem wegen der laufenden Meßwertgewinnung statistisch herausgemittelt werden können. Dies macht es möglich, die Menge der Flüssigkeit, deren Füllstand fahrzustandsabhängig schwankt, über Füllstandsmessungen nicht nur bei stehendem Fahrzeug und abgestelltem Motor, sondern auch im laufenden Fahrbetrieb zuverlässig festzustellen. Damit kann beispielsweise eine Unter- oder Überfüllung an Motoröl oder das Erreichen einer Minimumölmenge kontinuierlich während der Fahrt anerkannt und angezeigt werden. Des weiteren können die gewonnenen Daten über die jeweilige Motorölmenge zur Ermittlung des Ölverbrauchs in Abhängigkeit von der Fahrleistung herangezogen werden, wodurch sich vergleichsweise genaue Ölverbrauchsdaten auch für Betriebszyklen mit langen ununterbrochenen Fahrbetriebsphasen gewinnen lassen. Die Ölverbrauchsdaten können sowohl zur direkten Ölverbrauchskontrolle in Echtzeit verwendet als auch zu Wartungsdiagnostikzwecken abgespeichert werden.

Des weiteren ist eine Temperaturkompensation vorgesehen, die Ausdehnungen der Flüssigkeit berücksichtigt. Bei der Bestimmung der Motorölmenge wird als fahrzustandsspezifische Größe die Motordrehzahl erfaßt. Dies trägt der Tatsache Rechnung, daß bei gegebener Motorölmenge im laufenden Motorbetrieb ein motordrehzahlabhängiger Ölanteil als sogenannte Schluckmenge im Umlauf ist und von einer momentanen Füllstandsmessung nicht erfaßt wird. Aus der Kenntnis der Motordrehzahl läßt sich dieser Schluckmengenanteil ermitteln und bei der Umrechnung des gemessenen Füllstandes in die momentane Ölmenge korrigierend berücksichtigen.

Weiter wird die Fahrleistung zwischen Flüssigkeitsnachfüllvorgängen in Fahrleistungsklassen, z.B. in Intervalle mit einer Länge von 50 km, unterteilt, und für jede Fahrleistungsklasse werden einzeln Füllmengenwerte aus den für diese Klasse ermittelten Füllmengenmeßwerten berechnet. Durch diese statistische Mittelungsprozedur werden untypische Füllstandsmeßwerte, die z.B. durch starkes Abbremsen des Fahrzeugs oder plötzliche Motordrehzahländerungen verursacht sind, herausgemittelt, was die Zuverlässigkeit der Flüssigkeitsmengenbestimmung erhöht. Außerdem ermöglicht diese Maßnahme die Ermittlung des Verlaufs des Flüssigkeitsverbrauchs, z.B. des Motorölverbrauchs, in Abhängigkeit von der Fahrleistung anhand zuverlässiger, statistischer gemittelter Daten.

Nachteilig an den bekannten Verfahren ist, daß aufgrund der notwendigen statistischen Mitteilungen, um beispielsweise Ölspritzer oder Schwankungen aufgrund von Beschleunigungen und Verzögerungen herauszumitteln, das Verfahren viele Meßwerte über längere Zeiträume benötigt. Insbesondere bei kürzeren, stark wechselnden Fahrzuständen, wie beispielsweise Stadtfahrten mit vielen Anfahrvorgängen und Verzögerungen, sind die Mitteilungen zu ungenau, um die Flüssigkeitsmenge zu bestimmen.

Der Erfindung liegt daher das technische Problem zugrunde, ein Verfahren und eine Vorrichtung zur Bestimmung der Flüssigkeitsmenge in einem bewegten Behälter, insbesondere zur Bestimmung der Motorölmenge in einem Kraftfahrzeug zu schaffen, mittels derer schneller und zuverlässiger die Flüssigkeitsmenge bestimmbar ist.

Die Lösung des technischen Problems ergibt sich durch die Merkmale der Patentansprüche 1, 6 und 10. Weitere vorteilhafte Ausgestaltungen der Erfindung ergeben sich aus den Unteransprüchen.

Mittels eines nichtlinearen Prozeßbeobachters, dem fahrzeugdynamische Größen und ein Flüssigkeitsstand in einem Punkt des Behälters zugeführt werden, wird die Flüssigkeitsmenge im Behälter bestimmt. Aus den fahrzeugdynamischen Größen werden die geometrische Lage und die auf den Behälter einwirkenden Beschleunigungen bestimmt und daraus über die entsprechenden Gleichungssysteme die Flüssigkeitsmenge bestimmt. Im Gegensatz zum Stand der Technik, wo die fahrzeugdynamischen Schwankungen herausgemittelt werden, werden im erfindungsgemäßen Verfahren diese fahrzeugdynamischen Schwankungen gerade zur Auswertung herangezogen. Zur Realisierung des nichtlinearen Prozeßbeobachters eignen sich besonders Kalman-Filter oder Luenberger-Beobachter, die aus der Systemtheorie kontinuierlicher Steuerungssysteme gut bekannt sind.

Ein besonders geeignetes Anwendungsgebiet ist die Bestimmung der Motorölmenge in einem Kraftfahrzeug. Bei der Implementierung des Verfahrens in einem Kraftfahrzeug kann dabei auf die Vielzahl bereits aus anderen Steuergeräten (Motorsteuergerät, ABS-Steuergerät etc.) zurückgegriffen werden, so daß im wesentlichen nur der Sensor zur Bestimmung des Flüssigkeitszustandes an einem Punkt im Behälter benötigt wird. Die Längslage und die Längsbeschleunigung des Kraftfahrzeuges und damit der Ölwanne läßt sich beispielsweise aus dem Geschwindigkeitssignal und dem Fahrwiderstands-Steigungssignal des Getriebesteuergerätes ableiten. Entsprechend läßt sich die Querlage und Querbeschleunigung der Ölwanne aus dem Lenkwinkel der Querbeschleunigung aus dem ABS-Steuergerät gewinnen. Aufgrund der minimalen Anforderungen an Sensoren läßt sich das Verfahren auch sehr einfach für Nachrüstungszwecke in älteren Kraftfahrzeugen implementieren. Durch die direkte Bestimmung der Ölmenge aus den fahrzeugdynamischen Zustandsdaten läßt sich die Ölmenge im Vergleich zum Stand der Technik wesentlich schneller und genauer berechnen.

In einer weiteren bevorzugten Ausführungsform wird aus der Motordrehzahl und der Motortemperatur die im Schmierkreislauf befindliche Ölmenge abgeschätzt und zu der in der Ölwanne berechneten Ölmenge hinzuaddiert.

In einer weiteren bevorzugten Ausführungsform werden nicht erfaßbare Einflüsse, wie beispielsweise Rauschen in einem stochastischen Störgrößenmodell, berücksichtigt.

Vorzugsweise werden das Störungsmodell und/oder zur Berechnung der Eingangsgrößen des Prozeßbeobachters notwendige Teilmodelle durch den Prozeßbeobachter parametriert.

In einer alternativen Ausführungsform wird in der Startphase des Motors die Öltemperatur erfaßt und der Gradient der Öltemperatur bestimmt. Aus dem Gradienten läßt sich dann mittels eines Kennfeldes oder eines Zustandsmodells auf die Ölmenge schließen. Der Vorteil dieses Verfahrens liegt darin, daß unmittelbar in der Startphase eine genaue Bestimmung der Ölmenge vorliegt. Des weiteren ist der sensorische Aufwand für das Verfahren sehr gering und nur auf die Erfassung der Öltemperatur beschränkt. Daher läßt sich dieses verfahren vorzugsweise mit dem vorangegangenen Verfahren kombinieren, wobei die Ermittlung der Ölmenge in der Startphase durch den Gradienten der Öltemperatur und im laufenden Betrieb durch die Auswertung der kinematischen Einflüsse erfolgt.

In einer weiteren bevorzugten Ausführungsform werden bei der Gradientenbestimmung auch die zugeführte und die abgeführte Wärmemenge berücksichtigt. Dies kann durch entsprechende Parametrierung der Kennfelder mit den entscheidenden Einflußgrößen geschehen oder aber durch eine Abschätzung mittels eines Zustandsmodells bzw. eines nichtlinearen Prozeßbeobachters, da die Werte für die Wärmemengen nicht unmittelbar vorliegen. Ausgangspunkt für die Abschätzung ist die erzeugte Energie, die teilweise in thermische Energie umgesetzt wird. Ein weiterer Faktor ist die aus der Fahrzeugumgebung aufgenommene bzw. abgeführte Wärmemenge, die im wesentlichen durch die Außentemperatur charakterisiert ist. Bei der abgeführten Wärmemenge sind zusätzlich noch Zusatzkühlmaßnahmen des Motors, wie Regulierungen im Kühlkreislauf oder Ventilatoren, zu berücksichtigen.

Die Erfindung wird nachfolgend anhand eines bevorzugten Ausführungsbeispiels näher erläutert. Die Fig. zeigen:

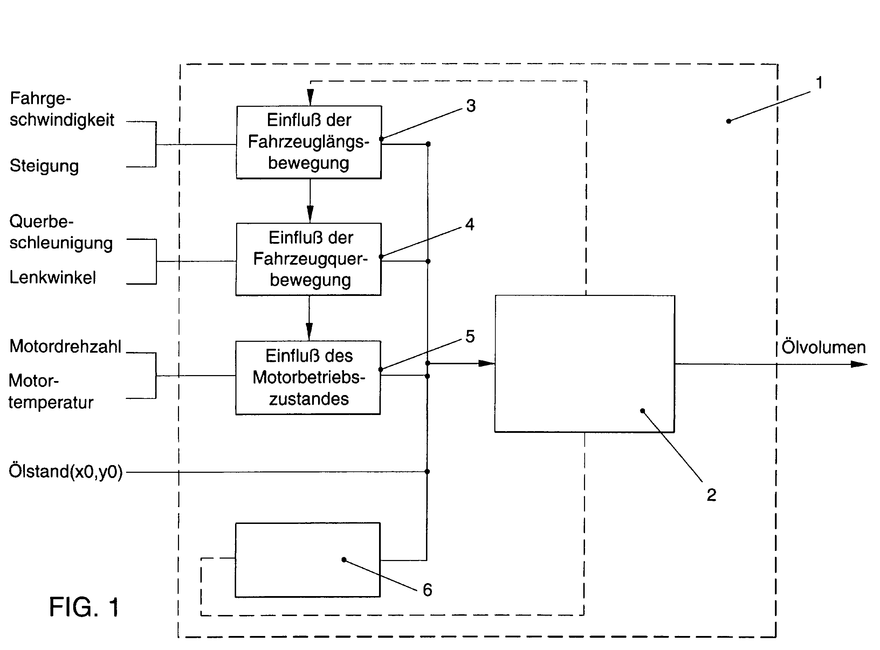

- Fig. 1: ein Blockschaltbild für die Bestimmung der Ölmenge im laufenden Betrieb aus fahrzeugdynamischen Daten,
- Fig. 2: ein linearisiertes Modell der Aufwärmung des Motoröls,
- Fig. 3: Temperaturverläufe für unterschiedliche Ölmengen und
- Fig. 4: Gradientenprofile für die Temperaturverläufe in Fig. 3.

Die Vorrichtung 1 für die Bestimmung der Ölmenge bzw. des Ölvolumens im laufenden Betrieb aus fahrzeugdynamischen Daten umfaßt einen nichtlinearen Prozeßbeobachter 2, Teilmodelle 3 - 5 und ein Störgrößenmodell 6. Der Vorrichtung 1 werden als fahrzeugdynamische Eingangsgrößen die Fahzeuggeschwindigkeit, die Steigung, die Querbeschleunigung und der Lenkwinkel zugeführt. Des weiteren wird der Vorrichtung 1 die Motordrehzahl, die Motortemperatur und der Ölstand an einem bestimmten Punkt (X₀, Y₀) der Ölwanne zugeführt. Die fahrzeugdynamischen Eingangsgrößen und die Motorwerte werden von vorhandenen Steuergeräten zur Verfügung gestellt, wohingegen der Ölstand in der Wanne durch einen nicht dargestellten Sensor erfaßt wird. Bevor die eigentliche Bestimmung des Ölvolumens vorgenommen werden kann, müssen aus den vorhandenen Eingangsgrößen die für den Prozeßbeobachter 2 notwendigen Eingangswerte gewonnen werden. Dies erfolgt in den Teilmodellen 3-5. Dem Teilmodell 3 werden die Fahrzeuggeschwindigkeit und die Steigung zugeführt. Aus diesen beiden Eingangsgräßen läßt sich die Längslage und die Längsbeschleunigung des Kraftfahrzeuges und damit der Ölwanne ermitteln. Entsprechend wird in dem Teilmodell 4 aus den Eingangsgrößen Querbeschleunigung und Lenkwinkel die Querlage und die Querbeschleunigung ermittelt. In dem dritten Teilmodell 5 wird aus den Eingangsgrößen Motordrehzahl und Motortemperatur die sich im Schmierkreislauf befindliche Ölmenge abgeschätzt, die dann später der ermittelten Ölmenge in der Ölwanne hinzuaddiert werden muß. Die Ausgangsdaten der Teilmodelle 3-5 und der Ölzustand an einem bestimmten Punkt (X₀, Y₀) werden dann dem Prozeßbeobachter zugeführt. Der Prozeßbeobachter 2, der beispielsweise als Kalman-Filter oder als Luenberger-Beobachter ausgebildet ist, bildet dann mittels eines mathematischen Modells die Flüssigkeitsverteilung im Behälter nach, so daß sich das vorhandene Ölvolumen abschätzen läßt. Das Stärgrößenmodell 6 berücksichtigt alle nicht erfaßten Einflüsse wie beispielsweise Rauschen. Das Störgrößenmodell 6 wird in Abhängigkeit vom Prozeßzustand vom Prozeßbeobachter 2 parametriert. Ebenso werden die Teilungsmodelle 3-5 vom Prozeßbeobachter 2 in Abhängigkeit vom aktuellen Prozeßzustand parametriert. Gegebenenfalls erfolgt zusätzlich eine Parametrierung in Abhängigkeit von Veränderungen der Prozeßeigenschaften, um beispielsweise Öl-Alterungen zu berücksichtigen. Wie leicht erkennbar ist, sind die Teilmodelle 3-5 nur notwendig, wenn die benötigten Eingangsgrößen für den Prozeßbeobachter 2 nicht direkt vorliegen. Werden diese hingegen direkt durch entsprechende Sensoren bestimmt oder in den zugehörigen Steuergeräten bereits ermittelt, so kann auf die Teilmodelle 3-5 verzichtet werden. Weiter ist leicht ersichtlich, daß die Eingangsgrößen der Vorrichtung 1 sehr variabel sind, solange sich aus diesen nur die relevanten Lage- und Beschleunigungsdaten ermitteln lassen, wobei primär auf die Daten zurückgegriffen wird, die bereits in den vorhandenen Steuergeräten vorliegen. Des weiteren ist auch möglich, die Teilmodelle 3-5 in den Prozeßbeobachter 2 mitzuintegrieren.

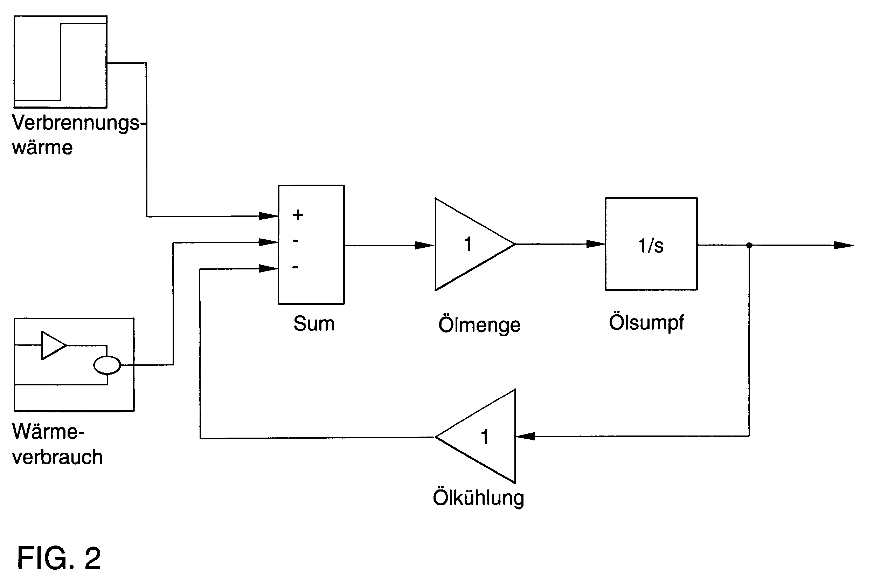

In der Fig. 2 ist ein linearisiertes Modell der Aufwärmung des Motoröls in der Startphase dargestellt. Die im Motor befindliche Ölmenge hat eine bestimmte Wärmekapazität, die sich aus der spezifischen Wärmekapazität und der Menge des im Motor befindlichen Öls ergibt. Dieser Ölmenge wird Wärme aufgrund der Verbrennungswärme zugeführt und aufgrund von Wärmeableitungen entzogen. Die Öltemperatur ergibt sich nun aus dem Integral des vom Motor zugeführten Wärmestroms um den vom Öl abgegebenen Wärmestrom. Da die Temperaturen des Öls im Kreislauf schwanken, wird die Öltemperatur im Ölsumpf gemessen, wo der größtmögliche Ausgleich zwischen den unterschiedlichen Öltemperaturen vorliegt. Dem Ölsumpf wird dabei Wärme durch das anströmende, vom Motor erwärmte Öl zugeführt und Wärme durch die Ölkühlung entzogen. Die durch die Ölkühlung abgeführte Wärmemenge muß daher bei der Bilanzrechnung der Wärmemengen berücksichtigt werden. Wird der Motor in Betrieb genommen, so heizt sich das Öl zunächst auf, um dann nach einiger Zeit einen Gleichgewichtszustand einzunehmen. Der Gleichgewichtszustand bei konstanten Betriebsbedingungen führt zu einer bestimmten Endtemperatur des Öls. Diese Endtemperatur des Öls unterscheidet bei unterschiedlichen Ölmengen. In der Praxis hat sich jedoch gezeigt, daß dieser Unterschied in weiten Bereichen variierender Ölmengen nicht zum Tragen kommt, sondern durch andere äußere Einflüsse überdeckt wird.

Ein deutlicher Unterschied als bei der Öltemperatur selbst ergibt sich aber beim Verlauf des Temperaturgradienten während der Aufwärmphase des Motors. Hierbei kommt die oben angesprochene Wärmekapazität des Öls zum Tragen. Bei einer größeren Ölmenge dauert das Aufheizen bis zur Endtemperatur länger als bei einer kleineren Ölmenge. Die Zeitkonstante wird im wesentlichen durch die von der Gesamtölmenge bestimmten Wärmekapazität des Öls und der Ölkühlung bestimmt. Dabei hat sich gezeigt, daß die Abhängigkeit der Ölkühlung von der Ölmenge deutlich geringer ist als die der Wärmekapazität.

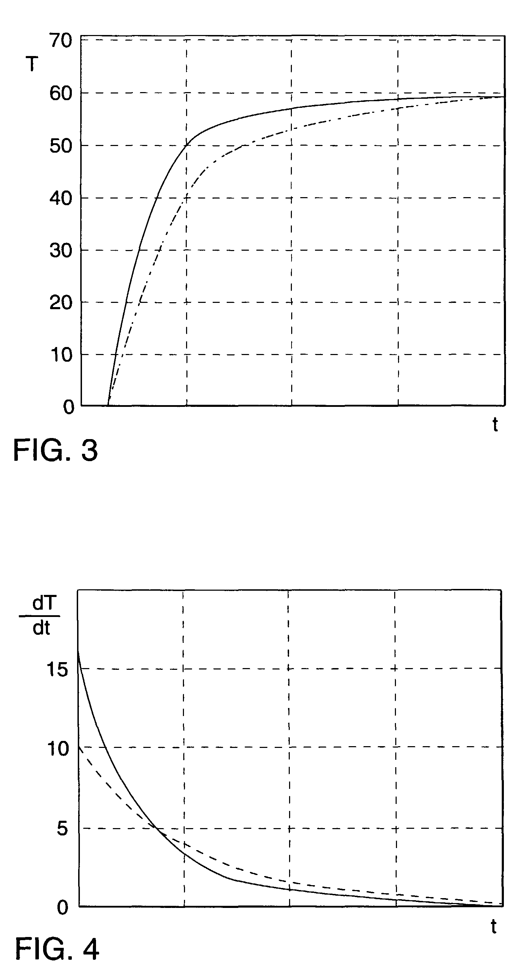

In der Fig. 3 sind beispielhaft zwei Temperaturverläufe in der Startphase für unterschiedliche Ölmengen dargestellt, wobei der durchzogene Kurvenverlauf die kleinere Ölmenge darstellt. Wie aus den Kurvenverläufen ersichtlich, sind die beiden Endtemperaturen identisch und somit zur Auswertung ungeeignet, wohingegen sich in den Verläufen der Temperaturgradienten in der Startphase ein signifikanter Unterschied ergibt, was in der Fig. 4 dargestellt ist, wobei der Gradient mit abnehmender Ölmenge stark ansteigt. Der Temperaturgradient wird außer durch die Wärmekapazität auch durch die zugeführte Wärme und durch die Kühlung des Öls bestimmt. Das Verfahren für die Bestimmung der Ölmenge aus dem Temperaturgradienten muß daher den Einfluß der hierfür bestimmten Größen, im wesentlichen also die Einspritzmenge, die Fahrgeschwindigkeit, die Außentemperatur und etwaige Zusatzkühlmaßnahmen des Motors mit berücksichtigen. Dieses kann entweder durch Kennfelder, einen nichtlinearen Prozeßbeobachter oder Messung der Außentemperatur realisiert werden.

## Patentansprüche

1. Verfahren zur Bestimmung der Flüssigkeitsmenge in einem bewegten Behälter, mittels eines Sensors zur Erfassung des Flüssigkeitsstandes im Behälter an wenigstens einem Punkt und eines nichtlinearen Prozeßbeobachters (2), wobei dem Prozeßbeobachter (2) fahrzeugdynamische Meßgrößen zugeführt werden, aus denen der Prozeßbeobachter (2) Lage und Beschleunigungen auf den Behälter ableitet und daraus die Flüssigkeitsverteilung in dem Behälter berechnet.

2. Verfahren nach Anspruch 1 zur Bestimmung der Motorölmenge in einem Kraftfahrzeug,
dadurch gekennzeichnet, daß
dem Prozeßbeobachter (2) als fahrzeugdynamische Meßgrößen die Fahrzeuggeschwindigkeit, ein die aktuelle Steigung repräsentierendes Signal, die Querbeschleunigung und der Lenkwinkel des Kraftfahrzeuges zurückgeführt werden.

3. Verfahren nach Anspruch 2,
dadurch gekennzeichnet, daß
die Motordrehzahl und die Motortemperatur dem Prozeß Prozeßbeobachter (2) zugeführt werden, der daraus eine im Schmierkreislauf befindliche Ölmenge schätzt.

4. Verfahren nach einem der vorangegangenen Ansprüche,
dadurch gekennzeichnet, daß
nicht erfaßbare Einflüsse in einem stochastischen Störgrößenmodell (6) berücksichtigt werden.

5. Verfahren nach Anspruch 4,
dadurch gekennzeichnet, daß
das stochastische Störgrößenmodell (6) und/oder zur Berechnung der Eingangsgrößen des Prozeßbeobachters (2) notwendige Teilmodelle (3-5) durch den Prozeßbeobachter (2) parametriert werden.

6. Verfahren zur Bestimmung der Motorölmenge in einem Kraftfahrzeug,
dadurch gekennzeichnet, daß
in der Startphase des Motors die Öltemperatur erfaßt und der Gradient der Öltemperatur bestimmt wird und aus dem Gradienten mit Hilfe von Kennfeldern oder eines Zustandsmodells auf die Ölmenge zurückgeschlossen wird.

7. Verfahren nach Anspruch 6,
dadurch gekennzeichnet, daß
die dem Motoröl zugeführte und die aus dem Motoröl abgeführte Wärme aus in den vorhandenen Steuergeräten befindlichen Daten abgeschätzt wird.

8. Verfahren nach Anspruch 7,
dadurch gekennzeichnet, daß
die Einspritzmenge, die Fahrgeschwindigkeit und die Außentemperatur zur Abschätzung der zugeführten Wärmemenge herangezogen werden.

9. Verfahren nach Anspruch 7 oder 8,
dadurch gekennzeichnet, daß
bei der Abschätzung der Wärmeabfuhr der Kühlkreislauf und Ventilatoren berücksichtigt werden.

10. Vorrichtung zur Durchführung des Verfahrens nach einem der Ansprüche 1 bis 5, umfassend mindestens einen Sensor zur Erfassung des Flüssigkeitszustandes an mindestens einem Punkt (X₀, Y₀) im Behälter und einen als Kalman-Filter und/oder Luenberger-Beobachter ausgebildeten nichtlinearen Prozeßbeobachter (2).
